# EUROPÄISCHE PATENTANMELDUNG

(11) **EP 3 293 426 A1**
(43) Veröffentlichungstag der Anmeldung: **14.03.2018**
(21) Anmeldenummer: 16188481.2
(22) Anmeldetag: 13.09.2016
(51) Int. Cl.: F16J 15/34, F16J 15/36, F16J 15/38

(54) **GASDICHTUNG**

(71) Anmelder: Siemens Aktiengesellschaft, 80333 München (DE)
(72) Erfinder: Kirchner, Christian, 47495 Rheinberg (DE)

(57) **Zusammenfassung**

Die Erfindung betrifft eine Gasdichtung, insbesondere Trockengasdichtung, die sich in einer Umfangsrichtung (CDR) in einer Achse (X) erstreckt, umfassend einen rotierenden Gleitring (RSR) und einen stehenden Gleitring (SSR), wobei der stehende Gleitring (SSR) axial beweglich ist, wobei die Gasdichtung (DGS) eine Gleithülse (SLV) umfasst, wobei die Gleithülse (SLV) mittels einer ersten Gleitfläche (SSF1) den stehenden Gleitring (SSR) an einer zweiten Gleitfläche (SSF2) entlang der axialen Beweglichkeit führt, dadurch gekennzeichnet, dass die Gleithülse (SLV) an einem Stator (STS) der Gasdichtung (DGS) gefestigt ist, wobei die Gleithülse (SLV) eine sich in Umfangsrichtung (CDR) erstreckende erste Ausnehmung (RZ1) und der Stator (STS) eine sich in Umfangsrichtung (CDR) erstreckende im Bereich der Befestigung der ersten Ausnehmung (RZ1) gegenüberliegende zweite Ausnehmung (RZ2) aufweist, derart, dass die erste Ausnehmung (RZ1) und die zweite Ausnehmung (RZ2) einen gemeinsamen sich in Umfangsrichtung (CDR) erstreckenden Hohlraum (CAV) definieren, wobei in dem Hohlraum (CAV) ein längliches Fixierungselement (FXE) angeordnet ist, das die erste Ausnehmung (RZ1) und zweite Ausnehmung (RZ2) zumindest teilweise derart ausfüllt, dass eine unbegrenzte axiale Relativbewegung nur bei radialer Verformung des Fixierelements (FXE) möglich ist.

## Beschreibung

Die Erfindung betrifft eine Gasdichtung, insbesondere Trockengasdichtung, die sich in einer Umfangsrichtung bezüglich einer Achse erstreckt, umfassend einen rotierenden Gleitring und einen stehenden Gleitring, wobei der stehende Gleitring axial beweglich ist, wobei die Gasdichtung eine Gleithülse umfasst, wobei die Gasdichtung ein Druckelement umfasst, das an dem stehenden Gleitring an einer ersten Anlagefläche mittels einer zweiten Anlagefläche anliegt, wobei ein elastisches Element mittels des Druckelements den stehenden Gleitring mit seiner Dichtfläche gegen den rotierenden Gleitring RSR axial andrückt.

Gasdichtungen bzw. Trockengasdichtungen der eingangs definierten Art sind bereits aus verschiedenen Veröffentlichungen bekannt. Beispiele hierfür sind WO2014/037150 oder WO2014/023581.

Derartige Trockengasdichtungen umfassen in der Regel Bauteile aus Keramik, insbesondere aus Siliziumkarbid oder Wolframkarbid hergestellt. Die keramischen Bauteile sind meist die stehenden und/oder rotierenden Gleitringe und ggf. angrenzende Elemente. Ein weiteres Beispiel aus der Patentliteratur ist durch die DE 39 25 403 C2 gegeben.

Neben der primären Dichtung der Gasdichtung, insbesondere Trockengasdichtung, ist es erforderlich, dass sowohl der rotierende Dichtring als auch der stehende Dichtring gegenüber Rotor bzw. Stator (Gehäuse und ggf. verbundene Bauteile) mittels einer im Wesentlichen statischen Dichtung abgedichtet werden. Wegen der allfälligen Axialschwingungen muss mindestens eine dieser Dichtungen axial beweglich sein. Das ist in der Regel zumindest die stehende Dichtung, weil an diesem Bauteil die Beweglichkeit leichter umsetzbar ist. Aufgrund der hohen Dynamik der Bewegungen ist diese Sekundärdichtung äußerst belastet.

Es hat sich gezeigt, dass die Sekundärdichtung, die in der Regel eine axiale Beweglichkeit gewährleisten muss, in herkömmlichen Bauweisen umständlich, weniger effektiv und defektanfällig war.

Die Erfindung hat es sich zur Aufgabe gemacht, die Sekundärdichtung - in der Folge als Dichtung (Zeichnung: Dichtung SSL) bezeichnet -, zu verbessern.

Zur Lösung der erfindungsgemäßen Aufgabe wird eine Gasdichtung der eingangs definierten Art mit den zusätzlichen Merkmalen des Kennzeichens des Anspruchs 1 vorgeschlagen. Die jeweils rückbezogenen Unteransprüche beinhalten vorteilhafte Weiterbildungen der Erfindung.

Begriffe, wie axial, radial, tangential oder Umgangsrichtung werden - wenn nicht anders angegeben - auf die zentrale Achse bezogen, in dessen Umfangsrichtung sich die erfindungsgemäße Gasdichtung erstreckt. Diese Achse fällt in der Regel mit einer Wellenrotationsachse zusammen, zu der die Gasdichtung eine Wellendichtung ausbildet, um einen Spalt zwischen einer rotierbaren Welle bzw. einem Rotor und einem Gehäuse abzudichten.

Bevorzugt ist die Wellendichtung bzw. die erfindungsgemäße Gasdichtung als ein für sich transportfähiger Einsatz - häufig auch als Cartridge bezeichnet - ausgebildet, so dass diese Modularität beispielsweise einen einfachen Austausch einer defekten Gasdichtung durch eine intakte Gasdichtung ermöglicht. Grundsätzlich ist es nach der Erfindung auch möglich, dass der Stator direkter, ggf. einstückiger Bestandteil des Gehäuses der Maschine, in der die Gasdichtung eingebaut wird, beispielsweise ein Radialturboverdichter - ist.

Eine vorteilhafte Weiterbildung der Erfindung sieht vor, dass die Dichtung zumindest teilweise aus Teflon bestehend ausgebildet ist.

Eine vorteilhafte Weiterbildung der Erfindung sieht vor, dass das Druckelement zwei in Umfangsrichtung sich erstreckende, von einander teilbare Abschnitte aufweist, einen ersten Abschnitt, an dem das elastische Element anliegt und einen zweiten Abschnitt, der die zweite Anlagefläche aufweist, wobei die Dichtung zumindest teilweise mit einem Befestigungsabschnitt zwischen den beiden Abschnitten angeordnet ist.

Eine vorteilhafte Weiterbildung der Erfindung sieht vor, dass der zweite Abschnitt, die dritte Gleitfläche umfasst.

Eine vorteilhafte Weiterbildung der Erfindung sieht vor, dass der erste Abschnitt im Wesentlichen aus Metall besteht.

Eine vorteilhafte Weiterbildung der Erfindung sieht vor, dass der zweite Abschnitt im Wesentlichen aus Keramik besteht.

Eine vorteilhafte Weiterbildung der Erfindung sieht vor, dass die Gleithülse aus Keramik besteht, insbesondere aus Siliziumkarbid oder Wolframkarbid. Der Gleitring und die Gleithülse bestehen aufgrund ihrer dauerhaft hohen Maßhaltigkeitsanforderungen bevorzugt aus diesen Keramiken.

Eine vorteilhafte Weiterbildung der Erfindung sieht vor, dass sich die Dichtung nach radial innen über die Anlagefläche zwischen den beiden Abschnitten des Druckelements hinaus und sich auf einer axialen Seite des höheren Drucks auch axial über den Übergang zwischen dem Druckelement und der Gleithülse hinaus erstreckt.

Eine vorteilhafte Weiterbildung der Erfindung sieht vor, dass die Gleithülse mittels der ersten Gleitfläche den stehenden Gleitring an einer zweiten Gleitfläche entlang der axialen Beweglichkeit radial führt.

Eine vorteilhafte Weiterbildung der Erfindung sieht vor, dass die dritte Gleitfläche zu der ersten Gleitfläche ein geringeres radiales Spiel aufweist als die zweite Gleitfläche.

Die Wärmeausdehnung dieser keramischen Werkstoffe beträgt etwa 3,5x10⁻⁶m/K mal Meter. Die Wärmeausdehnung von Stahl, demjenigen Werkstoff, der in der Regel zu diesen Keramiken der Dichtungen benachbart verbaut wird, beträgt im Vergleich dazu etwa 11x10⁻⁶m/K mal Meter. Die sich aus dieser Differenz der Wärmeausdehnungskoeffizienten ergebende Relativdehnung zwischen den Keramik-Komponenten und den Stahl-Komponenten muss entsprechend kompensiert werden, so dass eine simple Befestigung der keramischen Wellendichtungsbauteilen an den stählernen Bauteilen nicht in Frage kommt. Eine vorteilhafte Weiterbildung schlägt zu diesem Zweck vor, dass die Gleithülse an einem Stator der Gasdichtung befestigt ist, wobei die Gleithülse eine sich in Umfangsrichtung erstreckende erste Ausnehmung und der Stator eine sich in Umfangsrichtung erstreckende im Bereich der Befestigung der ersten Ausnehmung gegenüberliegende zweite Ausnehmung aufweist, derart, dass die erste Ausnehmung und die zweite Ausnehmung einen gemeinsamen sich in Umfangsrichtung ringartig erstreckenden Hohlraum definieren, wobei in dem Hohlraum ein längliches Fixierungselement angeordnet ist, das die erste Ausnehmung und zweite Ausnehmung zumindest teilweise derart ausfüllt, dass eine unbegrenzte axiale Relativbewegung nur bei radialer Verformung des Fixierelements möglich ist.

Damit das Fixierelement einfach montierbar ist, ist es nach einer vorteilhaften Weiterbildung derart elastisch ausgebildet, dass eine Biegeverformbarkeit quer zur Längsrichtung des Fixierelements gegeben ist. Auf diese Weise kann das Fixierelement in den sich in Umfangsrichtung erstreckenden gekrümmten Hohlraum unter einer entsprechenden Verbiegung bevorzugt tangential eingeschoben werden. Besonders bevorzugt weisen zu diesem Zweck entweder der Stator oder die Gleithülse selbst einen in den Hohlraum einmündenden Einschubkanal auf, so dass das Fixierelement in den Hohlraum durch den Einschubkanal einführbar ist. Zweckmäßig verläuft der Einschubkanal tangential zu dem sich in Umfangsrichtung erstreckenden Hohlraum.

Eine andere vorteilhafte Weiterbildung sieht vor, dass die Gleithülse aus Keramik besteht und der Stator aus Metall.

Eine andere vorteilhafte Weiterbildung sieht vor, dass der Stator oder die Gleithülse einen in den Hohlraum einmündenden Einschubkanal aufweist, so dass das Fixierelement in den Hohlraum durch den Einschubkanal einführbar ist.

Eine andere vorteilhafte Weiterbildung sieht vor, dass der Einschubkanal zumindest abschnittsweise im Wesentlichen tangential zum Hohlraum verläuft.

Eine andere vorteilhafte Weiterbildung sieht vor, dass die Gleithülse und/oder der stehende Gleitring und/oder der zweite Abschnitt zumindest abschnittsweise oder vollständig aus Wolframkarbid oder Siliziumkarbid bestehen.

Eine andere vorteilhafte Weiterbildung sieht vor, dass das Fixierelement als Schraubenfeder, insbesondere als Schlauchfeder oder Wurmfeder ausgebildet ist

Eine andere vorteilhafte Weiterbildung sieht vor, dass das Fixerelement auch in Radialrichtung verformbar ausgebildet ist. Hierzu kann das Fixierelement insbesondere als Schraubenfeder und besonders bevorzugt als Schlauchfeder oder Wurmfeder ausgebildet sein. Grundsätzlich kann das Fixierelement hierbei aus einem elastischen Werkstoff bestehen oder beispielsweise aus einem schraubenartig geformten Stahlprofil, das besonders bevorzugt ein flaches Profil aufweist. Die Schraubenfeder bzw. das Fixierelement kann weitestgehend spielfrei in den Hohlraum eingeführt bzw. in dem Hohlraum angeordnet sein, so dass die Gleithülse sicher an dem Stator befestigt ist. Unter einer elastischen Verformung des Fixierelements ergibt sich der zusätzliche Vorteil einer Elastizität der Gasdichtung, insbesondere in Axialrichtung. Trotz der axialen Nachgiebigkeit ist die erfindungsgemäße Fixierung der Gleithülse ausreichend, die benötigte Stabilität, insbesondere gegen Schwingungen, herzustellen. Weil der Rotor auch axial bei z. B. einer Turbomaschine schwingt, ist die zusätzliche axiale Elastizität in der Befestigung der Gleithülse für die Dichtung besonders vorteilhaft.

Im Folgenden ist die Erfindung anhand eines Ausführungsbeispiels unter Bezugnahme auf eine Zeichnung näher erläutert. Es zeigt:

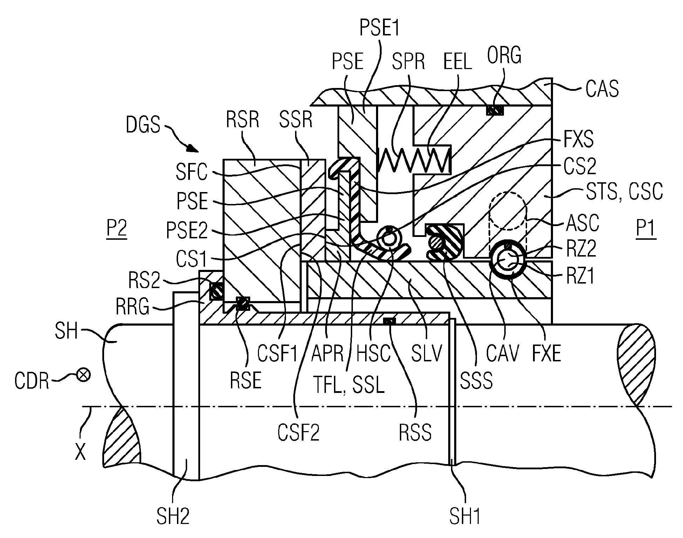

- Figur 1: einen schamtischen Längsschnitt durch eine erfindungsgemäße Gasdichtung.

Figur 1 zeigt einen schematischen Längsschnitt durch eine erfindungsgemäße Gasdichtung mit angrenzendem Gehäuse CAS und einer angrenzenden Welle SH.

Die erfindungsgemäße Gasdichtung DGS ist als ein Einsatz ausgebildet, der für sich unabhängig von dem Gehäuse CAS und der Welle SH transportfähig ist.

Auf der Welle SH ist ein Rotorring RRG mittels zweier Absätze SH1, SH2 radial und axial befestigt, wobei die beiden Absätze SH1, SH2 in nicht näher dargestellter Weise an der Welle SH lösbar befestigt sind. Der Rotorring RRG weist zur Welle SH eine rotierende statische Dichtung RSS auf.

In der Zeichnung auf der linken Seite befindet sich ein Maschineninnendruck P2 und auf der rechten Seite ein niedrigerer Außendruck P1.

Ein rotierender Gleitring RSR ist an dem Rotorring RRG mittels einer Wurmfeder RSE befestigt, wobei die Wurmfeder RSE nur unter radialer Deformation eine axiale Bewegung des rotierenden Gleitrings RSR aus der Sollposition heraus ermöglicht. Der rotierende Gleitring RSR ist mit einer zweiten rotierenden Dichtung RS2 zum Rotorring RRG abgedichtet.

Einer Dichtfläche SFC des rotierenden Gleitrings RSR steht ein stehender Gleitring SSR mit einer korrespondierenden Dichtfläche SFC axial gegenüber, wobei eine Feder SPR mittels eines Druckelements PSE den stehenden Gleitring SSR mit seiner Dichtfläche SFC gegen den rotierenden Gleitring RSR axial andrückt.

Das Druckelement PSE ist axial in zwei Abschnitte geteilt, die sich in Umfangsrichtung erstrecken, einem ersten Abschnitt PSE1 und einen zweiten Abschnitt PSE2, wobei die beiden Abschnitte mittels der Feder SPR axial aneinander und axial gegen den stehenden Gleitring SSR gedrückt werden. Der erste Abschnitt PSE1 ist metallisch ausgeführt und der zweite Abschnitt PSE2 keramisch, bevorzugt aus der gleichen Keramik, wie eine Gleithülse SLV, die sich in Umfangsrichtung erstreckt und als Führung dient für eine Axialbewegung des Druckelements PSE und des stehenden Gleitrings SSR. Das Spiel zwischen der Gleithülse SLV und dem zweiten Abschnitt PSE2 ist gering ausgebildet, so dass der zweite Abschnitt und damit das gesamte Druckelement PSE radial gelagert und axial verschiebbar geführt ist. Die Darstellung des Radialspiels der Gleithülse SLV zu den Elementen Gleitring SSR und Druckelement PSE ist in der Zeichnung nicht repräsentativ, das Speil kann jedenfalls auch geringer ausfallen und auch das Verhältnis der Radialspiele ist nicht repräsentativ wiedergegeben.

Das Radialspiel zwischen der Gleithülse SLV und dem zweiten Abschnitt PSE2 ist bevorzugt kleiner als 1mm auf den Durchmesser, so dass der zweite Abschnitt und damit das gesamte Druckelement PSE radial gelagert und axial verschiebbar geführt ist.

Der zweite Abschnitt PSE2 liegt mit einem axialen Vorstand APR, der eine erste axiale Anlagefläche CS1 aufweist, an einer zweiten Anlagefläche CS2 des stehenden Gleitrings SSR an. Die beiden Anlageflächen CS1, CS2 sind gegeneinander geläppt ausgebildet, so dass die nahezu spielfreie Anlage als Dichtung wirkt.

Zwischen den beiden Abschnitten PSE1, PSE2 des Druckelements PSE ist eine sich in Umfangsrichtung erstreckende Dichtung SSL, die als Teflondichtung TFL ausgebildet ist, angeordnet und mittels des Anpressdrucks des Druckelements PSE1 an dem stehenden Gleitring SSR gehalten, so dass die beiden ersten Abschnitte PSE1, PSE2 dichtend aneinander anliegen.

Der stehende Gleitring SSR ist axial verschiebbar auf der Gleithülse SLV mit wenig radialem Spiel geführt, so dass der Beweglichkeitsfreiheitsgrad auf die Axialbewegung eingeschränkt ist. Ebenso gelagert ist auch der zweite Abschnitt PSE2 des Druckelements PSE. Sowohl der stehende Gleitring SSR als auch die Gleithülse SLV, sowie der zweite Abschnitt PSE2 sind aus Wolframkarbid oder Siliziumkarbid hergestellt.

Die Dichtung SSL des Druckelements PSE erstreckt sich nach radial innen über die Anlagefläche zwischen den beiden Abschnitten PSE1, PSE2 des Druckelements PSE hinaus. Die Dichtung SSL erstreckt sich auf der Seite des höheren Drucks axial auch über den Übergang zwischen dem Druckelement PSE und der Gleithülse SLV hinaus. Aufgrund des geringen radialen Spiels zwischen der Gleithülse SLV und dem zweiten Abschnitt PSE2 des Druckelements PSE (das auch geringer ist als das Spiel zwischen dem stehenden Gleitring SSR und der Gleithülse SLV) wird unter Druck die Dichtung SSL nur geringfügig in diesen Radialspalt hinein extrudiert, so dass eine Dichtung gewährleistet ist.

Die stehende Gleithülse SLV ist mittels eines Befestigungselements FXE an einem Stator STS befestigt, wobei der Stator STS gleichzeitig ein Gehäuse CSC der Gasdichtung DGS ist.

Ein Hohlraum CAV ist definiert durch eine sich in Umgangsrichtung CDR erstreckende erste Ausnehmung RZ1 der Gleithülse SLV und eine sich in Umfangsrichtung CDR erstreckende im Bereich der Befestigung gegenüberliegende zweite Ausnehmung RZ2 des Stators STS.

Das Gehäuse CSC der Gasdichtung DGS ist gegenüber dem Gehäuse CAS der Turbomaschine mittels einer O-Ring-Dichtung ORG abgedichtet. Grundsätzlich ist es auch denkbar, dass das Gehäuse der Turbomaschine und das Gehäuse CSC der Gasdichtung DGS ein einziges Bauteil sind. Das Fixierelement FXE ist durch einen im Wesentlichen tangentialen Einschubkanal ASC tangential in den Hohlraum CAV einführbar.

Das Fixierelement FXE ist als Wurmfeder ausgebildet und dementsprechend handelt es sich im Grunde um eine Schraubenfeder, bevorzugt aus einem metallischen Werkstoff. Zum Zwecke der Dichtung ist zwischen der Gleithülse SLV und dem Stator STS noch eine Statordichtung SSS vorgesehen, den Differenzdruck zwischen dem Außendruck P1 und dem Innendruck P2 aufrechtzuerhalten.

Zum Zwecke der Sicherung in der gewünschten Position ist die Dichtung SSL bzw. Teflondichtung TFL mittels eines helikalen, sich in Umfangsrichtung CDR erstreckenden Federelements HSC radial mit dem radial inneren hervorstehendem Ende gegen die Gleithülse SLV gedrückt, so dass ein etwaiger Differenzdruck von der Teflondichtung TFL, insbesondere in dem Bereich zwischen dem statischen Gleitring SSR und der Gleithülse SLV, hier zwischen dem Druckelement PSE und der Gleithülse SLV abgedichtet ist. Hierbei wird die Teflondichtung TFL teilweise in einen Spalt zwischen der Gleithülse SLV und dem Druckelement hinein extrudiert. Das helikale Federelement HSC hält die Teflondichtung TFL lediglich in der hierfür geeigneten Position.

## Patentansprüche

1. Gasdichtung (DGS),
insbesondere Trockengasdichtung, die sich in einer Umfangsrichtung (CDR) bezüglich einer Achse (X) erstreckt, umfassend
einen rotierenden Gleitring (RSR) und einen stehenden Gleitring (SSR),
wobei der stehende Gleitring (SSR) axial beweglich ist,
wobei die Gasdichtung (DGS) eine Gleithülse (SLV) umfasst,
wobei die Gasdichtung (DGS) ein Druckelement (PSE) umfasst,
das an dem stehenden Gleitring (SSR) an einer ersten Anlagefläche (CSF1) mittels einer zweiten Anlagefläche (CSF2) anliegt,
wobei das Druckelement (PSE) axial beweglich ist,
wobei ein elastisches Element (EEL) mittels des Druckelements (PSE) den stehenden Gleitring (SSR) mit seiner Dichtfläche (SFC) gegen den rotierenden Gleitring RSR axial andrückt,
**dadurch gekennzeichnet, dass**
die Gleithülse (SLV) mittels einer ersten Gleitfläche (SSF1) das Druckelement (PSE) an einer dritten Gleitfläche (SSF3) entlang einer axialen Beweglichkeit radial führt,
wobei das Druckelement (PSE) eine Dichtung (SSL) umfasst, die einen sich im Umfangsrichtung erstreckenden Spalt zwischen dem Druckelement (PSE) und der Gleithülse (SLV) abdichtet.

2. Gasdichtung (DGS) nach Anspruch 1,
wobei die Dichtung (SSL) zumindest teilweise aus Teflon bestehend ausgebildet ist.

3. Gasdichtung (DGS) nach Anspruch 1 oder 2,
wobei das Druckelement (PSE) zwei in Umfangsrichtung sich erstreckende, von einander teilbare Abschnitte (PSE1, PSE2) aufweist, einen ersten Abschnitt (PSE1), an dem das elastische Element (EEL) anliegt und einen zweiten Abschnitt (PSE2), der die zweite Anlagefläche (CSF2) aufweist, wobei die Dichtung (SSL) zumindest teilweise mit einem Befestigungsabschnitt (FXS) zwischen den beiden Abschnitten (PSE1, PSE2) angeordnet ist.

4. Gasdichtung (DGS) nach mindestens einem der Ansprüche 1 bis 3,
wobei der zweite Abschnitt (PSE2), die dritte Gleitfläche (SSF3) umfasst.

5. Gasdichtung (DGS) nach mindestens einem der Ansprüche 1 bis 4,
wobei der erste Abschnitt (PSE1) im Wesentlichen aus Metall besteht.

6. Gasdichtung (DGS) nach mindestens einem der Ansprüche 1 bis 5,
wobei der zweite Abschnitt (PSE1) im Wesentlichen aus Keramik besteht.

7. Gasdichtung (DGS) nach mindestens einem der Ansprüche 1 bis 6,
wobei sich die Dichtung (SSL) nach radial innen über die Anlagefläche zwischen den beiden Abschnitten (PSE1, PSE2) des Druckelements (PSE) hinaus und sich auf einer axialen Seite des höheren Drucks auch axial über den Übergang zwischen dem Druckelement (PSE) und der Gleithülse (SLV) hinaus erstreckt.

8. Gasdichtung (DGS) nach mindestens einem der Ansprüche 1 bis 7,
wobei die Gleithülse (SLV) mittels der ersten Gleitfläche (SSF1) den stehenden Gleitring (SSR) an einer zweiten Gleitfläche (SSF2) entlang der axialen Beweglichkeit radial führt.

9. Gasdichtung (DGS) nach Anspruch 8,
wobei die dritte Gleitfläche (SSF3) zu der ersten Gleitfläche (SSF1) ein geringeres radiales Spiel aufweist als die zweite Gleitfläche (SSF2).

10. Gasdichtung (DGS) nach mindestens einem der Ansprüche 1 bis 9,
wobei die Dichtung SFC ein sich in Umfangsrichtung (CDR) erstreckendes Federelement (HSC) umfasst, das radial vorgespannt ist und mittels der Vorspannung die Dichtung (SFC) radial an die Gleithülse (SLV) andrückt.
